# FASCICULE DE BREVET EUROPEEN

(11) **EP 2 155 406 B1**
(45) Date de publication et mention de la délivrance du brevet: **28.07.2010**
(21) Numéro de dépôt: 08805830.0
(22) Date de dépôt: 22.05.2008
(51) Int. Cl.: B07C 3/14, G06K 9/66

(54) **PROCÉDÉ DE TRAITEMENT D'ENVOIS INCLUANT UNE CLASSIFICATION GRAPHIQUE DES SIGNATURES ASSOCIÉES AUX ENVOIS**
VERFAHREN ZUR HANDHABUNG VON ÜBERTRAGUNGEN EINSCHLIESSLICH EINER GRAFISCHEN KLASSIFIZIERUNG DER ZU DEN ÜBERTRAGUNGEN GEHÖRENDEN SIGNATUREN
METHOD OF HANDLING TRANSMITTALS INCLUDING A GRAPHIC CLASSIFICATION OF THE SIGNATURES ASSOCIATED WITH THE TRANSMITTALS

(30) Priorité: 30.05.2007 FR 0755342
(43) Date de publication de la demande: 24.02.2010
(73) Titulaire: Solystic, 94257 Gentilly Cedex (FR)
(72) Inventeur: DESPREZ, Olivier, F-78000 Versailles (FR)
(74) Mandataire: Prugneau, Philippe
(86) Numéro de dépôt international: PCT/FR2008/050885
(87) Numéro de publication internationale: WO 2008/152277

(56) Documents cités:
- DE-C1- 19 947 259
- DE-U1- 20 218 212
- FR-A- 2 883 493

## Description

L'invention concerne un procédé de traitement d'envois postaux dans lequel lors d'une première passe de tri des envois, on forme une image numérique de la surface de chaque envoi comportant des blocs d'information, on dérive de chaque image associée à un envoi une signature numérique à l'image d'une empreinte graphique qui est un identifiant logique pour l'envoi et on enregistre en mémoire la signature associée à l'envoi en correspondance avec des informations de tri et dans lequel lors d'une seconde passe de tri des envois, on forme de nouveau une image numérique de ladite surface de chaque envoi pour dériver une signature numérique courante associée à l'envoi et on recherche parmi les signatures enregistrées en première passe de tri une concordance avec cette signature courante afin de récupérer par association les informations de tri.

Un tel procédé est connu du document de brevet français FR-2841673 or FR-A-2883493. Avec ce procédé, il n'est plus nécessaire d'apposer sur la surface des envois des codes d'identification ou « chronomarques » appelé encore « IdTag ». L'identification des envois se fait avec un code « virtuel » ce qui présente l'avantage de pouvoir s'affranchir des imprimantes à codes barres et donc de réduire de façon très importante les coûts d'exploitation et de maintenance d'un équipement de tri postal.

Dans ce procédé connu, chaque signature numérique comprend une première composante dite « image » représentative de caractéristiques physiques de l'image numérique de l'envoi correspondant et une seconde composante dite « postale » indicative au moins d'une position spatiale des blocs d'information présents dans l'image de l'envoi. En particulier, la composante image est formée par des attributs dit « globaux » qui sont représentatifs de caractéristiques physiques globales prises sur l'ensemble des points de l'image numérique de l'envoi. La composante image est formée encore de seconds attributs dits « locaux » qui sont représentatifs de caractéristiques physiques locales prises sur des parties distinctes d'un quadrillage de l'image de l'envoi (ou de plusieurs quadrillages différents).

En pratique, lors de la recherche de concordance entre une signature courante et une signature candidate enregistrée dans une base de signatures pour la récupération des informations de tri, on procède d'abord à une comparaison des composantes image respectives des signatures puis après à une comparaison des composantes postales respectives des signatures.

Lorsque des lots d'envois provenant d'expéditeurs en nombre (appelés aussi gros expéditeurs ou mailers) doivent être triés en exploitant ces signatures ou codes d'identification virtuels, on est confronté au problème que globalement la composante image (attributs globaux et locaux) des signatures associées aux envois d'un même expéditeur ne peut pas servir pour discriminer les signatures entre-elles. En effet, les envois postaux issus d'un même expéditeur en nombre sont généralement identiques graphiquement : même type d'enveloppe, même logo imprimé sur l'enveloppe, même bloc d'adresse émetteur, même position du bloc d'adresse destinataire, etc.... Il ressort donc que la différenciation entre deux signatures d'envois d'un même expéditeur en nombre ne peut se faire en pratique que par le contenu du bloc d'adresse destinataire.

Mais il n'est pas exclu que dans la formation des signatures, il existe des situations où le système de traitement de données identifie un bloc d'adresse émetteur à la place d'un bloc d'adresse destinataire. Il en résulte que lors du balayage des signatures candidates associées à des envois d'un même expéditeur, il existe des possibilités de trouver une concordance entre deux signatures ayant la même composante image et dont en plus les composantes postales sont identiques du fait qu'elles identifient toutes les deux par erreur un bloc d'adresse émetteur à la place d'un bloc d'adresse destinataire.

Dans un tel contexte, on peut constater une augmentation d'erreurs d'appariement des signatures lors de la recherche de concordance. Ces erreurs d'appariement conduisent évidemment à des erreurs d'aiguillage des envois vers les sorties de tri et donc à des coûts supplémentaires pour le traitement postal en vue de la distribution du courrier.

Le but de l'invention est de donc proposer un procédé de traitement d'envois plus robuste qui permet de réduire les erreurs d'appariement indiquées plus haut, plus particulièrement dans des situations où les envois postaux à trier proviennent d'expéditeurs en nombre et présentent donc une très grande similitude graphique.

A cet effet, l'invention a pour objet un procédé de traitement d'envois postaux dans lequel lors d'une première passe de tri des envois, on forme une image numérique de la surface de chaque envoi comportant des blocs d'information, on dérive de chaque image associée à un envoi une signature numérique qui est un identifiant logique pour l'envoi et on enregistre en mémoire la signature associée à l'envoi en correspondance avec des informations de tri et dans lequel lors d'une seconde passe de tri des envois, on forme de nouveau une image numérique de ladite surface de chaque envoi pour dériver une signature numérique courante associée à l'envoi et on recherche parmi les signatures enregistrées en première passe de tri une concordance avec cette signature courante afin de récupérer par association les informations de tri, **caractérisé en ce qu**'il comprend les étapes suivantes :
- on regroupe les signatures en catégories de signatures ou classes graphiques selon un certain critère de similitude graphique pour calculer une valeur moyenne de signature pour chaque classe graphique ;
- on analyse pour chaque classe graphique considérée une activité de la valeur moyenne de signature pour détecter une activité significative d'un bloc d'information dans les images numériques ;
- et on exploite les résultats de ladite détection d'activité pour la recherche de concordance.

L'idée à la base de l'invention est donc de classer les signatures successives à partir de modèles graphiques de signatures consolidés en temps réel à la volée pour refléter à travers chaque modèle l'apparence graphique non changeante des images des envois dont les signatures relèvent du modèle en question. L'analyse d'activité (ou changement basse fréquence) qui est faite à chaque consolidation ou mise à jour du modèle lors du regroupement d'une nouvelle signature dans la classe graphique correspondante à ce modèle de signature permet d'exhiber la position du bloc d'adresse de destination dans les images des envois car ce bloc d'adresse postal de destination est probablement celui qui présente l'activité basse fréquence la plus significative à la différence des autres blocs d'information qui sont normalement stables quand on considère les envois d'un même expéditeur en nombre.

Le procédé selon l'invention peut présenter les particularités suivantes :
- les signatures sont regroupées en classes graphiques selon un certain critère de similitude graphique de leur composante image pour calculer une valeur moyenne des composantes image des signatures relevant de la classe graphique considérée
- on analyse l'activité de la valeur moyenne de la composante image pour détecter une activité significative d'un bloc d'information dans les images numériques
- les résultats de ladite détection d'activité sont exploités pour comparer les composantes postales des signatures
- on exploite les attributs globaux et les attributs locaux des signatures pour établir une similarité de signatures
- on réalise un seuillage de la distance vectorielle normée sur les attributs globaux pour établir ladite similarité
- on réalise un calcul de coefficient de corrélation sur les attributs locaux pour établir ladite similarité
- on utilise une méthode d'analyse topologique du type K-means pour analyser l'activité des attributs locaux de la composante image
- les classes graphiques sont construites à la volée en seconde passe de tri à partir des signatures courantes successives

Le procédé selon l'invention peut être mis en oeuvre avec tout type d'envois postaux tels que lettres, objets plats de petit ou grand format. Le procédé selon l'invention peut également s'appliquer au tri des paquets et autres articles identifiés par un code d'identification virtuel.

Un exemple de mise en oeuvre du procédé selon l'invention est décrit plus en détail ci-après et illustré par les dessins. Cette description n'est donnée qu'à titre d'exemple indicatif et nullement limitatif de l'invention.
La figure 1 illustre de façon très schématique un envoi postal avec plusieurs blocs d'informations.
La figure 2 montre de façon schématique une machine de tri pour la mise en oeuvre du procédé selon l'invention.
La figure 3 illustre sous la forme d'un organigramme le déroulement du procédé tri connu lors d'une première passe de tri.
La figure 4 illustre très schématiquement l'extraction de la composante image de la signature d'un envoi postal.
La figure 5 illustre très schématiquement l'extraction de la composante postale de la signature d'un envoi postal.
La figure 6 illustre sous la forme d'un organigramme le déroulement du procédé selon un premier mode de réalisation de l'invention lors d'une seconde passe de tri.
La figure 7 détaille l'étape de classification des signatures dans le procédé selon l'invention.
La figure 8 représente la comparaison des composantes image lors de la classification des signatures dans le procédé selon l'invention.
La figure 9 représente un exemple de mise à jour des composantes image des classes graphiques dans le procédé selon l'invention.
La figure 10 détaille l'étape de modification de la composante postale de l'envoi courant à partir de la composante image de la classe graphique correspondante.
La figure 11 détaille l'étape de modification de la composante postale de l'envoi courant à partir de la composante postale de la classe graphique correspondante.
La figure 12 illustre sous la forme d'un organigramme le déroulement du procédé selon un deuxième mode de réalisation de l'invention lors d'une seconde passe de tri.
La figure 13 illustre le principe d'une réduction d'espace d'exploration par un mécanisme de prédiction

Selon le procédé de l'invention, on identifie donc des envois postaux, tels que lettres, objets plats de petit ou grand format à enveloppe papier ou matière plastique, et autre article à trier automatiquement par des signatures numériques qui sont dérivées de l'image de la surface des envois qui comporte généralement un bloc d'adresse postal de destination. Cette signature numérique appelée encore signature d'image sert donc à identifier de façon univoque un envoi à la place d'une chronomarque à code à barres dans une machine de tri postal automatique. Le terme machine désigne au sens large un équipement de tri postal installé sur un ou plusieurs sites de tri postal incluant le cas échéant des vidéo-codeurs.

### Formation des signatures numériques

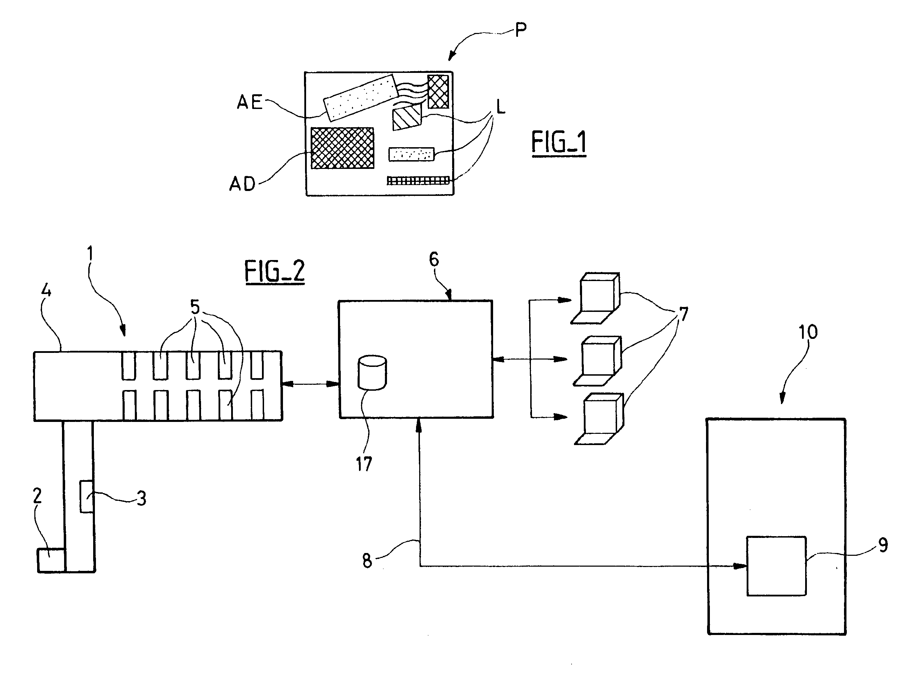

Sur la figure 1, on a illustré un envoi postal référencé P dont la surface comporte par exemple un premier bloc d'information AD qui correspond à l'adresse de distribution postale ou adresse de destination, un bloc d'information AE qui correspond à une adresse d'expéditeur et un bloc d'information L pouvant revêtir la forme d'un logo graphique qui correspond à d'autres information textuelles supplémentaires telles qu'une flamme publicitaire imprimé par l'expéditeur.

Sur la figure 2, on a illustré très schématiquement une machine de tri postal 1 qui comprend classiquement une entrée d'alimentation 2 avec un magasin de chargement des envois P et un dépileur pour la mise en série sur chant des envois, une caméra numérique 3 pour former une image de la surface de chaque envoi comportant les différents blocs d'informations rappelés plus haut, et un carrousel à godets 4 qui dirige les envois vers des sorties de tri 5. Chaque sortie de tri peut être équipée de plusieurs bacs (typiquement un bac avant et un bac arrière) de sortie de tri ou d'un bac compartimenté sans sortir du cadre de l'invention.

On a également représenté un système de traitement de données référencé 6 pour la reconnaissance d'adresse postale par OCR qui est associé à un système de vidéo-codage 7 comme cela est bien connu. Selon l'invention, le système 6 est agencé également pour dériver de l'image numérique d'un envoi formée par la caméra 3 une signature numérique.

On a également représenté un système 9 analogue au système 6 mais qui fait partie d'une autre machine de tri 10, ce système 9 étant relié en communication par exemple par un réseau de télécommunication 8 au système 6 pour une application du procédé selon l'invention à un processus de tri en plusieurs passes de tri sur plusieurs machines de tri.

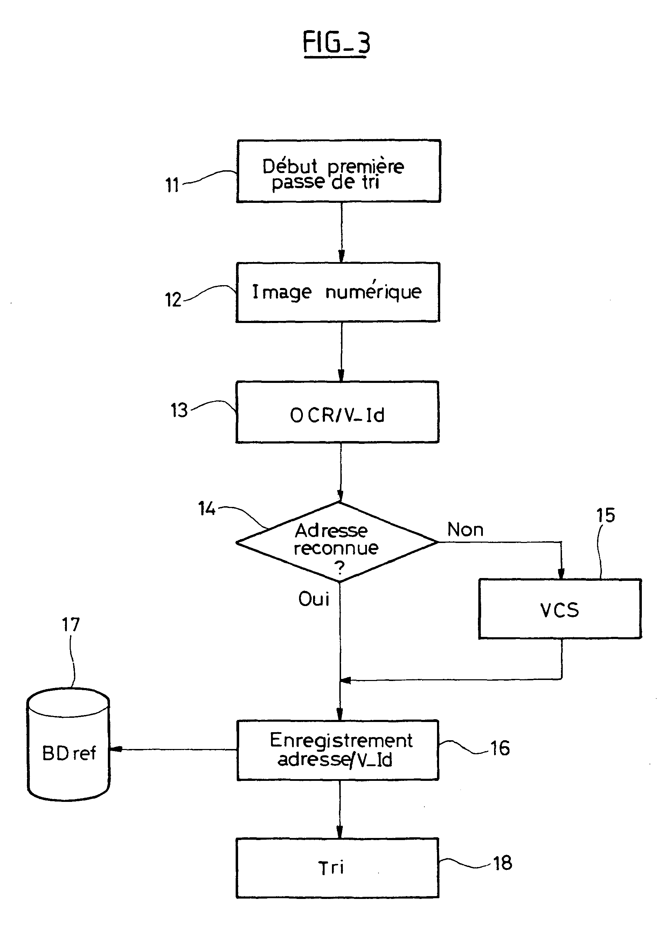

La figure 3 illustre de façon schématique la construction des signatures numériques lors d'une première passe de tri dans la machine 1. Dans une étape initiale 11, on injecte dans la machine de tri 1 des envois postaux P par l'entrée d'alimentation 2. Les envois postaux P sont dépilés et convoyés en série sur chant jusqu'à la caméra numérique 3.

A l'étape 12, on forme une image numérique de la surface de l'envoi courant pouvant comporter les différents blocs d'information illustrés sur la figure 1, par exemple AE, AD et L.

A l'étape 13, le système 6 entreprend une reconnaissance automatique d'adresse de distribution par OCR à partir de l'image et dérive en même temps de cette image une signature numérique V-Id attribuée à l'envoi.

Dans l'étape 14, si l'adresse postale a été reconnue de façon univoque à l'étape 13, on enregistre en mémoire machine dans l'étape 16 les données d'adresse résultant de la reconnaissance OCR en correspondance avec la signature V-Id de l'envoi.

Si à l'étape 13, l'adresse n'a pas été complètement reconnue par l'OCR, c'est-à-dire que l'on a obtenu une information d'adresse équivoque, ou encore aucun résultat, à l'étape 15 on transmet l'image de l'envoi au système de vidéo-codage 7 pour une extraction de l'information d'adresse par un opérateur de codage vidéo, suite à quoi les informations d'adresse obtenues par vidéo-codage en 15 sont enregistrées en 16 en correspondance avec la signature obtenue à l'étape 13.

Sur la figure 3, le bloc indiqué par 17 représente une base de données appelée BDref dans laquelle sont enregistrées en correspondance pour chaque envoi la signature numérique V-Id et des données de tri (incluant l'information d'adresse) de l'envoi reconnues par OCR ou par vidéo-codage lors de la première passe de tri.

L'étape 18 correspond au processus de convoyage de l'envoi depuis la caméra 3 vers les sorties de tri de la machine.

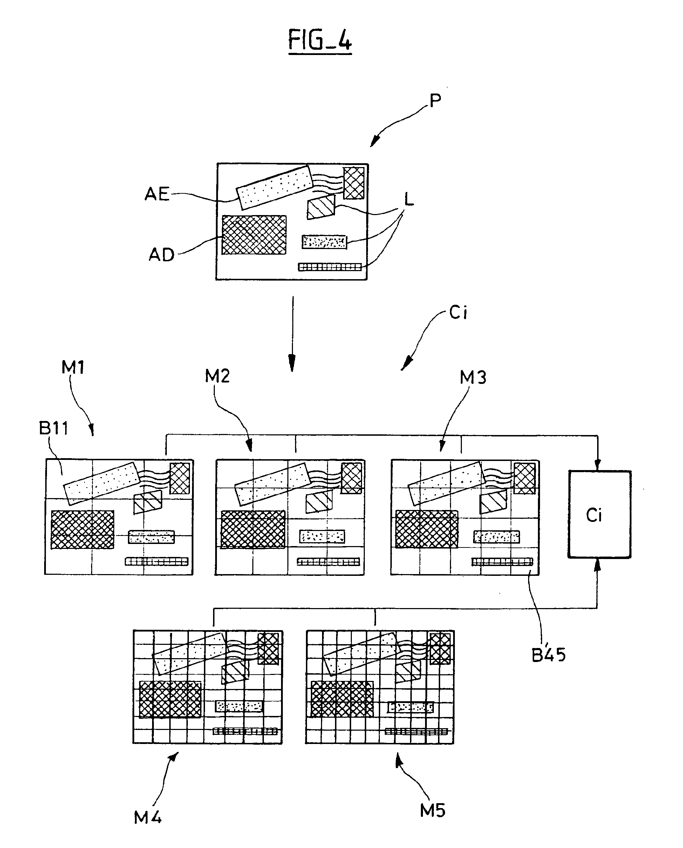

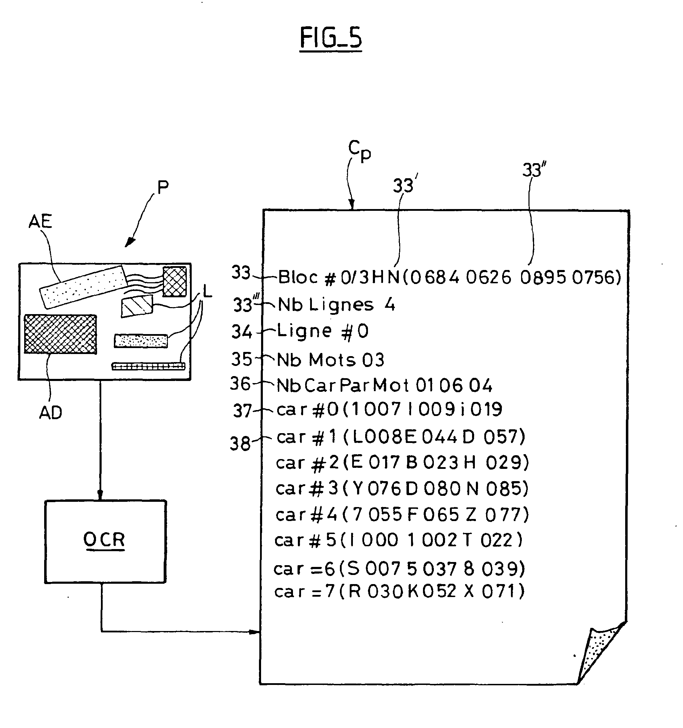

Les figures 4 et 5 illustrent maintenant plus en détail les composantes d'une signature selon l'invention. Sur la figure 4 on a de nouveau représenté l'image numérique d'un envoi postal P, généralement une image numérique à plusieurs niveaux de gris, avec les blocs d'information AD, AE et L.

Une première composante de la signature selon l'invention est appelée « composante image » Ci qui est représentative des caractéristiques physiques de l'image. Cette composante image est par exemple extraite par analyse statistique de la luminance des points de l'image numérique qui aura subi préalablement une succession de filtrages abaissant le niveau de résolution de l'image afin de réduire les temps de traitement pour l'analyse statistique et de disposer d'un contenu de type basse-fréquence lequel est peu sensible aux fluctuations de luminance lors d'acquisitions multiples. La luminance d'un point de l'image correspond à la valeur de niveau de gris du point de l'image.

A partir de l'image numérique basse résolution d'un envoi postal, le système 6 extrait par calcul, des attributs globaux représentatifs de caractéristiques physiques globales de l'image tels que la hauteur et la largeur du pli postal, valeur de luminance moyenne des points de l'image numérique, écart-type, entropie des valeurs de luminance.

On peut également extraire par calcul, des attributs locaux représentatifs de caractéristiques physiques locales de l'image prises sur des parties distinctes de l'image numérique. La figure 4 montre l'image numérique de l'envoi P subdivisée en plusieurs parties distinctes B11,B'45 issues de différents quadrillages ou maillages M1,M2,M3,M4,M5 dans l'image numérique. Le quadrillage M1 définit ici 3x3 parties distinctes. Le quadrillage M5 définit 8x10 parties distinctes. Le nombre de parties distinctes dans un quadrillage et le nombre de quadrillages peut être un paramètre de l'analyse statistique appliquée à l'image numérique pour extraire la composante image Ci de la signature. A partir de chaque partie telle que B11 et B'45 de l'image numérique issue d'un quadrillage tel que M1 ou M3, on peut extraire des attributs locaux tels que la valeur de luminance moyenne des points de cette partie de l'image numérique, écart-type, entropie des valeurs de luminance dans cette partie de l'image numérique. Ces attributs locaux contiennent une information d'autant plus discriminante que les envois postaux sont hétérogènes. L'ensemble des attributs globaux et locaux extraits pour une image numérique constituent donc la composante image Ci de la signature.

Sur la figure 5, on a illustré une seconde composante dite « composante postale » Cp de la signature qui est indicative au moins de la position spatiale des blocs d'information tels que AD, AE et L dans une image d'un envoi. Un système de reconnaissance optique de caractères OCR classiquement utilisé dans une machine de tri postal est capable de fournir des données indicatives de la position spatiale des blocs d'informations textuels détectés dans l'image numérique. Ces données indicatives de position spatiale peuvent être les coordonnées spatiales et d'orientation de la zone rectangulaire formant chaque bloc d'information. Un système OCR est apte également à fournir une description textuelle de chaque bloc d'information détecté dans l'image numérique. Une description textuelle d'un bloc d'information tel que AD par exemple peut consister dans l'indication du nombre de lignes de caractères détectées dans le bloc d'information, le nombre de mot détecté dans chaque ligne de caractères, le nombre de caractères détectés dans chaque mot de chaque ligne de caractères. Sur la figure 5 on a illustré un exemple de description textuelle du bloc d'information AD constituant la composante postale Cp de la signature d'un envoi postal :
« BLOC#0/3 » désigné par 33, référence le bloc d'information 0 parmi les 3 blocs d'information détectés dans l'image numérique ;
« HN » désigné par 33', est une donnée indicative de l'orientation du bloc d'information 0 dans l'image numérique ;
« (0684 0626 0895 0756) » désigné par 33", sont des données représentatives des coordonnées spatiales du bloc d'information 0 dans l'image numérique ;
« NbLignes 4 » désigné par 33"', indique que le bloc d'information 0 comporte 4 lignes de caractères ;
« Ligne #0 » désigné par 34, référence la première ligne de caractères détectée dans le bloc d'information 0 ;
« NbMots 03 » désigné par 35, est une donnée indiquant que 3 mots ont été détectés dans la première ligne de caractères ;
« NbCarParMot 01 06 04 » désigné par 36, sont des données indiquant que les 3 mots de la première ligne de caractères comprennent respectivement 1, 6 et 4 caractères ;
« car #0 (1 007 I 009 i 019) » désigné par 37, sont des données indiquant que pour le premier caractère de la première ligne de caractères, l'OCR a identifié 3 caractères candidats respectivement 1, I et i avec des distances de ressemblance respectivement de 007, 009 et 019 ;
« car#1 (L 008 E 009 D 057) » désigné par 38, sont des données indiquant que pour le second caractère de la première ligne de caractères, L'OCR a identifié 3 caractères candidats respectivement L, E et D avec des distances de ressemblance respectivement de 008, 009 et 057 ;
... et ainsi de suite pour les autres caractères de la première ligne de caractères sachant qu'une valeur 0 pour la distance de ressemblance est la distance la plus faible, c'est-à-dire représente l'écart le plus faible par rapport au caractère idéal.

La construction d'une signature part donc de l'idée qu'une image numérique d'un envoi postal est un signal bidimensionnel interprétable dont le contenu peut être appréhendé tant au niveau physique qu'au niveau symbolique. De ce fait que la signature d'un envoi postal est formée de deux composantes Ci et Cp complémentaires qui ne sont pas corrélées entre elles (indépendantes l'une de l'autre).

### Recherche de concordance des signatures en seconde passe de tri

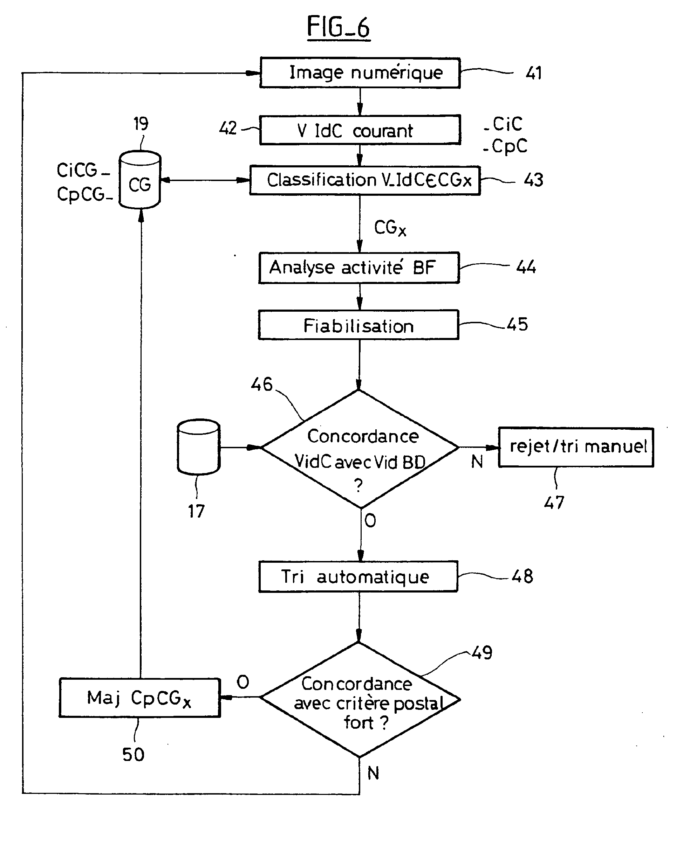

Sur la figure 6 on a représenté le processus de gestion des signatures lors d'une seconde passe de tri faisant suite à la première passe de tri illustrée sur la figure 3. Les envois triés en première passe sont donc entrés de nouveau dans la machine de tri 1 et repassent en série sur chant devant la caméra 3. On forme dans l'étape 41 de nouveau une image numérique de la surface d'un envoi courant comportant des blocs d'information tels que le bloc d'adresse de destination AD et dans l'étape 42 on dérive de nouveau une signature courante V-IdC pour l'envoi courant comme indiqué plus haut. La signature courante V-IdC comprend une composante image CiC et une composante postale CpC.

Ensuite, à l'étape 46, on compare les composantes image et postale CiC et CpC de la signature courante V-IdC aux composantes image et postale Ci, Cp des signatures enregistrées dans la base BDRef 17 pour détecter une concordance.

Cette comparaison peut commencer par la comparaison des attributs globaux respectifs des composantes image qui inclut un seuillage des valeurs absolues des variations sur chaque attribut global pour faire un premier filtrage parmi les signatures enregistrées dans la base 17. Ce filtrage permet d'éliminer les signatures fortement dissemblantes de la signature courante et de ne retenir qu'un faible nombre de signatures candidates pour la poursuite de la comparaison.

Puis on effectue sur ces signatures candidates une comparaison des attributs locaux de la composante image ce qui peut encore réduire le nombre de signatures candidates dans la base 17. Cette comparaison peut être basée d'abord sur le calcul d'un coefficient de corrélation normalisé glissant entre les histogrammes correspondants dans la signature courante et les signatures candidates respectivement ce qui permet de s'affranchir des variations de luminance entre les deux images numériques comparées et ensuite sur le calcul d'un coefficient de corrélation normalisé, par type d'attribut, entre les autres attributs locaux dans la signature courante et dans les signatures candidates respectivement qui permet de s'affranchir des problèmes de normalisation dus à la différence de variabilité de chaque attribut local. Les signatures candidates sont ensuite triées par ordre de ressemblance décroissant sur la base des coefficients de corrélation et un nombre fixé de signatures candidates les plus ressemblantes sont retenues.

La comparaison des composantes postale Cp des signatures commence : on mesure la ressemblance des données indicatives de position des blocs d'information. Cette seconde comparaison exploite avantageusement un second critère décorrélé du critère de comparaison des composantes image. Ces signatures candidates peuvent ensuite être triées par ordre décroissant à partir d'une mesure de ressemblance des descriptions textuelles des blocs d'information.

Il est entendu que la comparaison des composantes postale peut être effectuée avant la comparaison des composantes image ou même que les comparaisons des composantes postale et image soient effectuées simultanément sans s'éloigner de la portée de l'invention.

Si à l'étape 46, on n'arrive pas à détecter une concordance, alors à l'étape 47 on dirige l'envoi courant vers une sortie de rejet pour pouvoir être par exemple trié manuellement. Si à l'étape 46, on détecte une concordance, les données de tri et d'adresse pour l'envoi courant sont récupérées dans la base 17 et l'envoi courant est dirigé automatiquement vers une sortie de tri correspondante à l'étape 48.

### Catégorisation des signatures

Selon le procédé de l'invention, avant l'étape 46 sur la figure 6, on réalise un processus de fiabilisation d'une part de la signature courante et d'autre part des signatures de la base BDRef à l'aide d'une classification de ces signatures. Cette fiabilisation permet lors de la recherche de concordance d'ajuster la composante postale des signatures à comparer de façon à éviter des erreurs d'appariement.

Le principe de cette classification est de créer d'abord une sorte de dictionnaire dans lequel sont répertoriées des catégories ou « classes graphiques » CG de signatures.

Chaque classe graphique est modélisée par une composante image CiCG et une composante postale CpCG similaire à celle d'une signature comme décrit plus haut.

Selon l'invention, ce dictionnaire est évolutif en temps réel dans le sens que les composantes image et postale des classes graphiques sont mises à jour à la volée c'est-à-dire que au fur et à mesure on attribue une signature à une classe graphique et cette classe graphique est par conséquent consolidée. Cette mise à jour à la volée ne nécessite pas de traitement différé, elle est exécutée en temps réel. De plus, avec une telle mise à jour à la volée il n'est pas nécessaire de transmettre le dictionnaire pour un tri ultérieur dans un centre de tri distant.

Comme on pourra le comprendre, selon une caractéristique importante du procédé selon l'invention, on calcule à chaque mise à jour d'une catégorie graphique une valeur moyenne de la composante image (phase de consolidation) et on analyse l'activité basse fréquence de cette valeur moyenne pour évaluer la position du bloc d'adresse destinataire ce qui permet lors de la recherche de concordance à l'étape 46 d'utiliser le bloc d'information approprié lors de la comparaison de la composante postale des signatures. On entend par analyse basse fréquence, une analyse des changements parmi des images basse résolution.

A l'étape 43, on réalise donc un processus de classification de la signature courante VidC, c'est-à-dire que l'on compare la composante image CiC de la signature courante à la composante image CiCG des classes graphiques présentes dans le dictionnaire 19 pour déterminer la classe graphique CGx du dictionnaire qui est la plus semblable à la signature courante. Plus particulièrement selon le procédé de l'invention, on compare les attributs locaux et globaux des composantes image CiC et CiCG pour identifier une classe graphique d'appartenance CGx en sortie de l'étape 43. Si aucune classe graphique du dictionnaire ne correspond à la signature courante, il y a création d'une nouvelle classe graphique CGx.

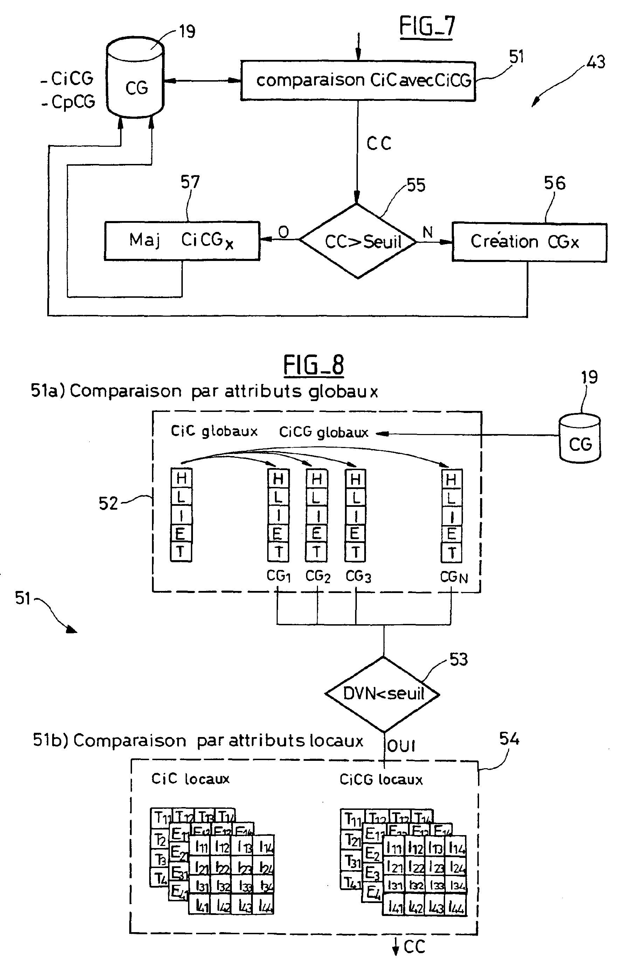

Les figures 7 et 8 illustrent plus particulièrement le processus de comparaison des composantes images pour réaliser cette classification. Ces figurent sont commentées plus loin.

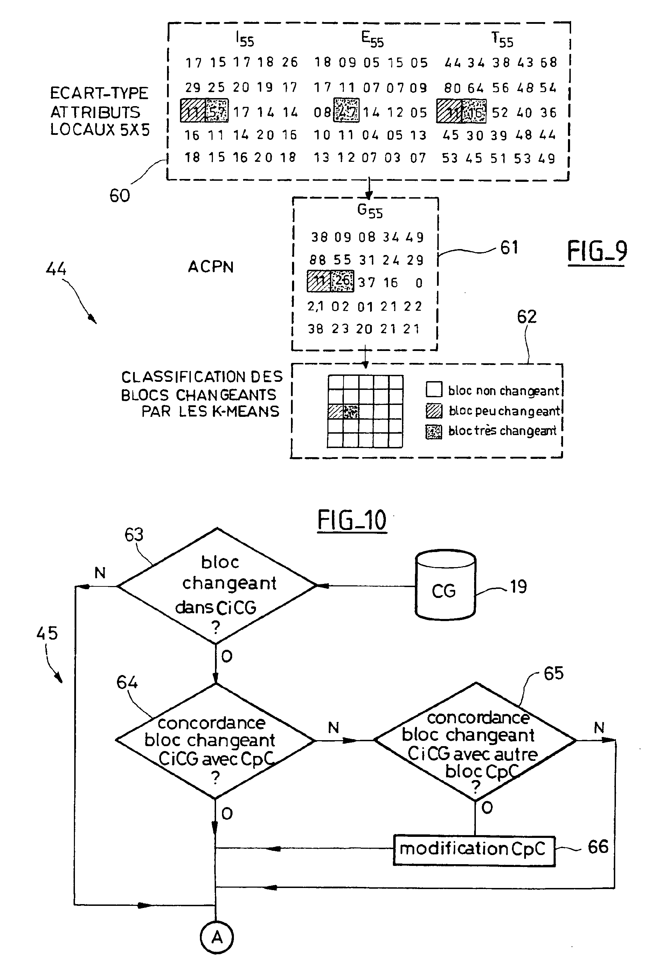

A l'étape 44 qui suit l'étape de classification, on réalise une analyse de l'activité basse fréquence de la composante image de la classe graphique CGx pour détecter une activité basse fréquence significative d'un bloc d'information dans les images numériques associées aux signatures relevant de cette classe graphique. Cette étape 44 est décrite plus particulièrement en référence à la figure 9.

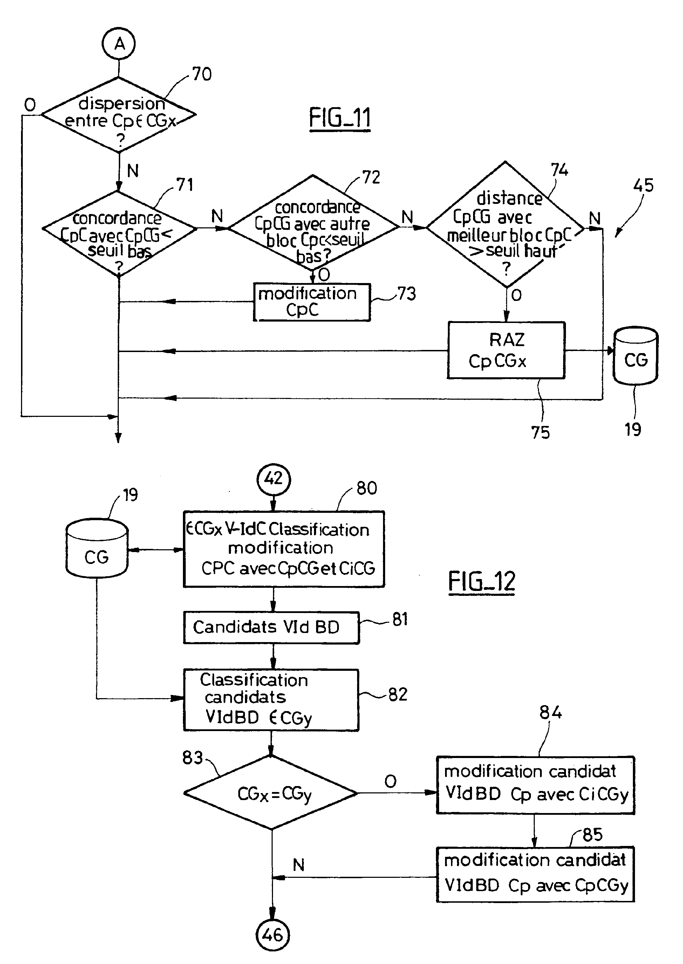

A l'étape 45, on réalise pour la signature courante un traitement de fiabilisation à partir des résultats de l'analyse d'activité à l'étape 44 qui est plus détaillé en référence aux figures 10 et 11. A l'issue de l'étape 45, les composantes postale de la signature courante et de la classe graphique CGx peuvent être ajustées. Ces ajustements permettent d'éviter les erreurs d'appariement dans l'étape 46 de recherche de concordance avec les signatures enregistrées dans la base 17.

Après l'étape 46 de recherche de concordance, on effectue en 50 une consolidation de la composante postale de la classe graphique CGx identifiée pour l'envoi courant que si à l'étape précédente 49 on est dans une situation ou un certain « critère postal fort » est vérifié. On entend par « critère postal fort » une situation selon laquelle les composantes postales CpC de la signature courante et d'une signature concordante identifiée à l'étape 46 sont semblables (par exemple : même identification du bloc d'adresse de destination, même nombre de lignes de caractères dans ce bloc, même nombre de mots par ligne dans ce bloc, etc...).

Le processus des étapes 41 à 50 sur la figure 6 se répète ainsi pour les envois courants successifs traités en seconde passe de tri.

Sur les figures 7 et 8, on a donc illustré plus en détail l'étape 43 de classification des signatures. A l'initialisation du processus, c'est-à-dire pour le premier envoi postal de la deuxième passe de tri, le dictionnaire ou base de données 19 des classes graphiques CG est normalement vide. Pour répondre à des contraintes de traitement temps-réel, on peut limiter le nombre classes graphiques CG maintenues dans le dictionnaire à une certaine valeur NbMaxCG qui peut être réglable. La valeur NbMaxCG peut par exemple être conditionnée par une information « a priori » donnée par l'opérateur machine indicative de l'hétérogénéité des envois postaux à traiter. En général pour un tri en deux passes d'envois provenant de plusieurs expéditeurs en nombre, on pourra régler la valeur NbMaxCG à environ 100. Une valeur NbMaxCG égale à 100 correspond à un lot d'envois postaux faiblement homogène, c'est-à-dire avec un nombre d'envois successifs appartenant au même expéditeur qui est relativement bas.

Sur la figure 7, à l'étape 51 on compare la composante image courante CiC de la signature courante V-IdC avec la composante image CiCG de chaque classe graphique enregistrée dans la base de données 19 pour détecter une certaine similarité. La comparaison des composantes image est réalisée de la même manière que décrite précédemment pour l'étape 46. En particulier, la comparaison est d'abord réalisée sur les attributs globaux et ensuite sur les attributs locaux des composantes image CiC et CiCG. Les attributs globaux et locaux sont obtenus à partir d'une image numérique basse résolution de l'envoi, par exemple de 0,25 pixel par mm.

La figure 8 illustre plus particulièrement cette étape 51 de comparaison des attributs globaux (51a) et locaux (51 b) des composantes image CiC et CiCG. Comme attributs globaux, on a illustré : la hauteur H de l'envoi postal, la largeur L, valeur de luminance moyenne I des points de l'image numérique, l'écart-type E et l'entropie S des valeurs de luminance. A gauche sur la figure 8, on a illustré dans le cadre 52 un premier vecteur (tableau à une colonne) les valeurs H,L,I,E,T pour CiC et par quelques vecteurs les valeurs semblables pour les CiCG associées aux classes CG1,CG2, ...., CG_{N}.

Pour présélectionner les classes graphiques CGi candidates, on compare d'abord chaque attribut global de la composante image CiC avec l'attribut correspondant d'une des composantes image CG1,CG2, ...., CG_{N}. Par exemple, pour déterminer si la classe graphique CG1 est candidate, on compare la différence entre les hauteurs H de CiC et de CG1 avec un seuil τ1, on compare la différence entre les largeurs L de CiC et de CG1 avec un seuil τ2... les seuils τ1, τ2... pouvant être différents, et si pour tous les attributs, la différence est inférieure au seuil alors CG1 est candidate.

On effectue ensuite un calcul de distance (distance vectorielle normée désignée sur la figure 8 par DVN) entre le vecteur HLIET pour CiC et le vecteur HLIET de chaque classe graphique candidate. Ces distances vectorielles normées DVN sont également comparées à un seuil (qui peut être réglable) dans l'étape 53 pour déterminer la ou les classes graphiques CGi qui sont les plus similaires à la signature courante.

Sur la base de la ou des classes graphiques CGi ainsi présélectionnées, on compare les attributs locaux de la composante image CiCG de ces classes graphiques avec les attributs locaux de la composante image CiC de la signature courante. Sur la figure 8, on a illustré les attributs locaux dans le cadre 54 par des triplets de matrices de 4x4 (résultant donc d'un quadrillage 4x4 pour la construction de la signature) affectées respectivement à la valeur de luminance moyenne I de points d'image, l'écart-type E et l'entropie S des valeurs de luminance.

On corrèle les attributs locaux de CiC avec les attributs locaux de CiCG de chaque classe graphique sélectionnée en 53 et le coefficient de corrélation CC calculé (-1≤CC≤1) qui est le plus élevé est retenu à l'issue de l'étape 51. Bien entendu il est possible d'utiliser plusieurs tailles de quadrillage dans le calcul des valeurs de corrélation.

Ensuite à l'étape 55, on compare à un seuil (réglable le cas échéant) ce coefficient de corrélation CC pour entreprendre une actualisation du dictionnaire 19 des classes graphiques. Ainsi, si à l'étape 55 le coefficient de corrélation CC est inférieure au seuil, on ajoute dans l'étape 56 une nouvelle classe graphique CGx dans le dictionnaire 19 et on actualise le nombre de classes graphiques maintenues dans le dictionnaire (le cas échéant suppression d'une classe graphique en cas de dépassement de la valeur NbMaxCG, la classe graphique supprimée du dictionnaire étant celle qui est la moins utilisée pendant une période de référence par exemple). Les composantes CiCG et CpCG de la nouvelle classe graphique CGx sont initialisées avec les composantes CiC et CpC de la signature courante utilisée dans l'étape 46.

Maintenant si, à l'étape 55 le coefficient de corrélation CC est supérieur ou égal au seuil, on actualise en 57 le compteur d'utilisation de la classe graphique CGx et on actualise cette classe graphique CGx.

Le réglage du seuil de l'étape 55 permet d'ajuster le niveau de similitude requis pour la catégorisation. En pratique, il faut trouver un seuil qui permette de rassembler les signatures d'envois qui présentent une ressemblance graphique importante en évitant que les envois d'un même expéditeur ayant la même apparence graphique puissent aboutir à la création de plusieurs classes graphiques. A l'issue de l'étape 43, une classe graphique CGx est donc identifiée comme similaire à la signature courante VidC.

Sur la figure 9, on a illustré un ensemble d'attributs locaux de la composante image de la classe graphique CGx qui servent à l'analyse d'activité basse fréquence dans l'étape 44 sur la figure 6. Ces attributs locaux sont des valeurs d'écart-type sur : luminance moyenne I, écart-type E et l'entropie T. Ces valeurs se rapportent à des zones distinctes d'un certain quadrillage de l'image d'un envoi comme expliqué plus haut. On a représenté sur la figure à titre d'exemple un quadrillage de l'image de 5x5 ce qui donne 3 matrices 60 avec chacune 25 valeurs d'écart-type. Pour calculer chaque valeur d'écart-type dans une matrice 155, E55 et T55, on fait une moyenne consolidée avec la valeur correspondante de l'attribut local de la signature courante. On peut donc considérer que par le calcul de cet écart-type on calcule une valeur moyenne de signature pour la classe graphique CGx. Les 3 matrices 155, E55 et T55 peuvent être fusionnées en une matrice G55, par exemple selon une analyse en composantes principales normée (ACPN) bien connue de l'homme de l'art. Cette matrice G est une sorte de « grille de changements » qui exhibe les changements basse fréquence, c'est-à-dire les changements qui interviennent à chaque consolidation de la matrice G.

En 62, on a représenté une synthèse de la matrice G selon laquelle les éléments matriciels sont répartis en 3 classes par une méthode topologique méthode telle qu'une méthode non supervisée de type "K-means" basée sur la mesure de proximité dans l'espace des observations. La méthode des "K-means" permet d'isoler dans la matrice G des éléments matriciels selon 3 niveaux : Niveau non changeant - Niveau peu changeant - Niveau très changeant, respectivement illustrés par des carrés en blanc, gris et noir. Pour s'affranchir des variations liées aux fluctuations mécaniques d'acquisition, on peut ne pas tenir compte des carrés détectés comme « changeants » qui sont sur les bords de la matrice G. On peut regrouper les carrés en fonction de leur connexité et de leur activité basse fréquence. On peut utiliser plusieurs matrices G ayant des quadrillages différents. A l'issue de l'étape 44, on a détecté normalement la position spatiale d'un bloc d'information qui présente l'activité basse fréquence la plus significative.

La figure 10 illustre la prise en compte du résultat de l'analyse d'activité basse fréquence dans l'étape 45. En 63, si on a détecté une activité basse fréquence d'un élément matriciel de G (ou des éléments matriciels de plusieurs matrices G) en détectant la présence par exemple d'un carré noir (bloc très changeant en 62), on vérifie en 64 si la position de ce carré dans la matrice G coïncide avec la position du bloc d'information dans la composante postale CpC de la signature courante qui a été retenu comme bloc d'adresse destinataire. La coïncidence peut s'établir par une projection spatiale des coordonnées du carré et du bloc d'information pour mesurer une distance spatiale et ensuite par une comparaison de cette distance mesurée à un seuil. Dans le cas où une coïncidence est détectée, le processus se poursuit à l'étape 70 sur la figure 11.

Si à l'étape 63, aucune activité basse fréquence n'a été détectée, on poursuit à l'étape 70 sur la figure 11.

Si à l'étape 64, on ne détecte pas de coïncidence spatiale entre le bloc d'information identifié dans la composante postale CpC de la signature courante et « le bloc » de la matrice présentant l'activité basse fréquence la plus significative, alors à l'étape 65, on réalise une mesure de la coïncidence spatiale entre ce « bloc » de plus forte activité basse fréquence et tous les autres blocs d'information identifiés dans la composante postale CpC de la signature courante. Si on ne détecte aucune coïncidence spatiale avec ces autres blocs d'information, on poursuit le processus à l'étape 70 de la figure 11.

Si à l'étape 65, on détecte une coïncidence spatiale avec l'un de ces autres blocs d'information, on modifie à l'étape 66 la composante postale CpC de la signature courante pour identifier ce bloc d'information comme étant probablement le bloc d'adresse destinataire, ce bloc sera donc utilisé dans l'étape 46 pour la recherche de concordance de signatures.

Sur la figure 11, à l'étape 70 on réalise une mesure consolidée sur la dispersion de la position spatiale du bloc d'information identifié comme bloc d'adresse destinataire dans la composante postale de toutes les signatures successives formant la classe graphique CGx. Cette mesure de dispersion se présente sous la forme d'une valeur d'écart-type. Si on détecte que la distance mesurée est supérieure à un certain seuil, le processus se poursuit à l'étape 46 de la figure 6. On est dans une situation où la composante postale CpC de la classe graphique CGx n'est pas assez fiable du fait que la composante postale des signatures ayant servi à construire cette classe graphique est instable.

Par contre, si à l'étape 70 la distance mesurée est inférieure audit seuil, le processus se poursuit à l'étape 71 où on mesure la concordance spatiale entre la composante postale de la classe graphique CGx et la composante postale CpC de la signature courante. Cette mesure consiste par exemple à calculer l'écart de position entre le centre du bloc d'information identifié comme bloc d'adresse destinataire dans la composante postale de la signature courante et la position moyenne du centre du bloc d'adresse destinataire de la classe graphique correspondante. On compare cette mesure à un seuil bas et si la mesure est inférieure à ce certain seuil bas on poursuite le processus à l'étape 46 de la figure 6 pour une recherche de concordance de signatures.

Si à l'étape 71, on ne détecte pas de concordance spatiale, alors le processus se poursuit à l'étape 72 où on recherche s'il existe un bloc d'information identifié dans la composante postale CpC de la signature courante pour lequel la distance avec le bloc d'information identifié comme bloc d'adresse de destination de la composante postale de la classe CGx est inférieure au seuil bas.

Dans l'affirmative à l'étape 72, on passe à l'étape 73 où ce bloc d'information est maintenant identifié dans la composante postale CpCG de la classe graphique CGx comme étant probablement le bloc d'adresse destinataire.

Par contre, dans la négative à l'étape 72, on poursuit le processus à l'étape 74 où on réalise une mesure de la distance spatiale entre tous les blocs d'information identifiés dans la composante postale CpC de la signature courante et le bloc d'information identifié comme bloc d'adresse destinataire dans la composante postale de la classe graphique CGx. Si cette distance est supérieure à un seuil haut, on ré-initialise (RAZ) la composante postale de la classe CGx à l'étape 75 dans le dictionnaire 19.

Sur la figure 12, on a représenté un autre mode de mise en oeuvre du procédé selon l'invention qui se différencie de celui de la figure 6 au niveau de l'étape 42. A l'étape 80 qui suit l'étape 42 de génération d'une signature courante VidC, on effectue une classification de la signature courante à l'aide d'un dictionnaire 19 comme expliqué plus haut. On récupère une classe graphique semblable CGx. On modifie le cas échéant la composante postale CpC de la signature courante à partir de la composante image CiCG de la classe graphique CGx et on modifie le cas échéant la composante postale CpCG de la classe graphique CGx.

Maintenant, à l'étape 81 on récupère de la base de signatures 17 des signatures candidates selon un mécanisme de prédiction de séquences connu du brevet français FR-2883943. L'étape 81 sert à limiter l'espace d'exploration dans la base 17 en tirant profit de la prise en compte d'un certain séquencement (ordre de passage) des envois en première passe de tri qui se répète en seconde passe de tri. Cet espace d'exploration limité est constitué de signatures candidates.

A l'étape 82, on réalise une classification de chaque signature candidate dans le dictionnaire 19 de classes graphiques selon le mécanisme de classification décrit précédemment. A l'issue de l'étape 82, on a identifié pour chaque signature candidate une classe graphique CGy.

Si dans l'étape 83, on détecte que la classe graphique CGx de la signature courante est identique à la classe graphique CGy de la signature candidate considérée, alors à l'étape 84 on modifie la composante postale Cp de la signature candidate selon le mécanisme décrit en relation avec les figures 10 et 11 pour repositionner correctement le bloc d'adresse postale destinataire dans la composante postale de la signature candidate. Puis à l'étape 85, on modifie le cas échéant la composante postale de la signature candidate en fonction de la composante postale de la classe graphique CGx comme décrit en relation avec la figure 11. Le procédé se poursuit ensuite à l'étape 46 de la figure 6. Il faut comprendre qu'on répète le processus entre les étapes 82 à 85 pour chaque signature candidates en sortie de l'étape 81.

Maintenant si à l'étape 83, on n'a pas détecté de classe graphique commune entre la signature courante et les signatures candidates, le processus se poursuit directement à l'étape 46 de la figure 6.

Le processus de limitation de l'espace d'exploration de l'étape 81 part de l'idée d'attribuer en première passe de tri à chaque envoi un numéro d'ordre chronologique NO qui est enregistré en mémoire en correspondance avec la signature de l'envoi dans la base 17. Chaque numéro d'ordre chronologique NO peut être constitué par exemple par la juxtaposition d'un numéro de centre de tri affecté au centre de tri dans laquelle se trouve la machine de tri 1, d'un numéro de machine de tri affecté à la machine de tri dans laquelle est trié l'envoi, d'un numéro de bac de sortie de tri affecté au bac de sortie de tri dans lequel est dirigé l'envoi et d'un indice chronologique affecté à l'envoi. En pratique, cet indice est par exemple la valeur d'un compteur associé à un bac de sortie de tri et qui est initialisé au moment où un premier envoi est dirigé vers le bac et qui est incrémenté d'une unité à chaque fois qu'un nouvel envoi est dirigé dans le bac. De cette manière, à chaque envoi est affecté un numéro d'ordre NO qui est unique.

A l'issue de la première passe de tri, les signatures sont regroupées en séquence dans la base de données 17. Par exemple, les signatures sont regroupées et ordonnées séquentiellement par centre de tri, par machine et par bac selon l'ordre dans lequel les envois sont stockés dans chaque bac de sortie de tri. Comme détaillé ci-après, les séquences de signatures contiguës en base de données 17 constituent des segments identifiables.

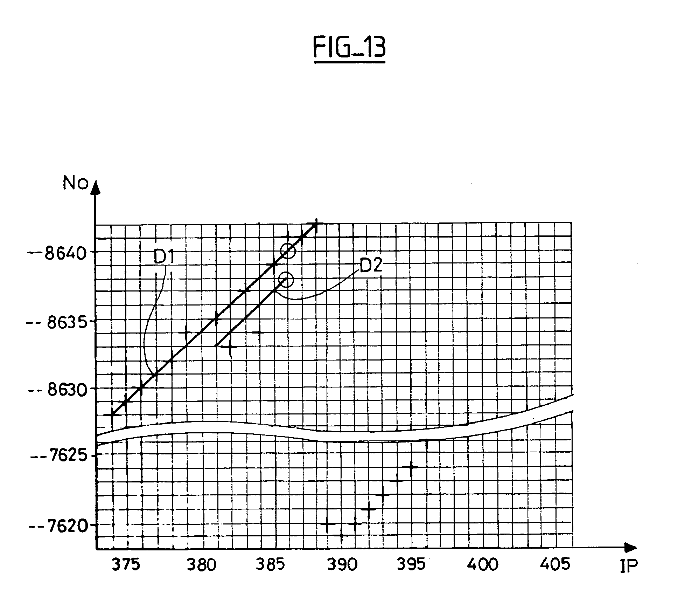

Lors de la seconde passe de tri, à la fin de l'étape 80 sur la figure 12 on affecte à la signature V-IdC de l'envoi courant un indice de passage IP (allant de 1 à n...). Suite à quoi, on calcule un numéro d'ordre chronologique NO estimé pour la signature courante par une approximation linéaire comme décrit dans le brevet FR-2883943. Ce calcul est réalisé par approximation linéaire à partir d'une série de numéros d'ordre chronologique stockés en mémoire. Sur la figure 13, on a représenté sur un graphique, un axe des abscisses sur lequel sont portés des indices IP de passage d'envoi 374 à 405 qui correspondent respectivement au passage en seconde passe des 374^{ème} à 405^{ème} envois pour lesquels une signature numérique V-Id a été extraite dans l'étape 80. On a reporté sur l'axe des ordonnées, des exemples de numéros d'ordre chronologique NO attribués aux envois en première passe, ici des envois stockés dans les bacs numérotés « 76 » et « 86 ». Le calcul par approximation linéaire consiste, à partir d'une série de couples indice de passage d'envoi/numéro d'ordre chronologique (IP, NO) illustrés par une croix sur la figure 13, à déterminer par un système d'équation les coefficients a, b d'une droite (NO = a.IP + b) telle que D1 ou D2 pour pouvoir ensuite calculer un numéro d'ordre chronologique NO placé sur cette droite en fonction d'un indice de passage IP courant.

De plus, le mode de mise en oeuvre du procédé selon l'invention illustré figure 12 exploite avantageusement le mécanisme de prédiction décrit ci-dessus lors de l'étape de consolidation 50. A l'étape 50, la composante postale de la classe graphique CGx identifiée pour l'envoi courant est consolidée si à l'étape 49 on est dans une situation de « critère postal fort » comme expliqué précédemment et si en plus le numéro d'ordre chronologique de la signature concordante déterminée à l'étape 46 correspond au numéro d'ordre chronologique NO estimé.

## Revendications

1. Procédé de traitement d'envois postaux (P) dans lequel lors d'une première passe de tri des envois, on forme (12) une image numérique de la surface de chaque envoi comportant des blocs d'information (AD,AE,L), on dérive (13) de chaque image associée à un envoi une signature numérique (V-Id) qui est un identifiant logique pour l'envoi et on enregistre (16) en mémoire la signature (V-Id) en correspondance avec des informations de tri et dans lequel lors d'une seconde passe de tri des envois, on forme (41) de nouveau une image numérique de ladite surface de chaque envoi pour dériver (42) une signature numérique courante (V-IdC) associée à l'envoi et on recherche parmi les signatures enregistrées en première passe de tri une concordance avec cette signature courante afin de récupérer par association les informations de tri pour l'envoi, **caractérisé en ce qu'**il comprend les étapes suivantes :
- on regroupe (43) les signatures en catégories de signatures ou classes graphiques (CG) selon un certain critère de similitude graphique pour calculer (57) une valeur moyenne de signature pour chaque classe graphique ;
- on analyse (60,61,62) pour chaque classe graphique considérée une activité de la valeur moyenne de signature pour détecter une activité significative d'un bloc d'information dans les images numériques ;
- et on exploite les résultats de ladite détection d'activité pour la recherche de concordance.

2. Procédé selon la revendication 1, dans lequel chaque signature numérique associée à un envoi comprend une composante image (CiC) représentative de caractéristiques physiques de l'image numérique de l'envoi et une composante postale (CpC) représentative au moins de la position spatiale des blocs d'information présents dans l'image de l'envoi, et dans lequel :
- les signatures sont regroupées en classes graphiques selon un certain critère de similitude graphique de leur composante image pour calculer une valeur moyenne (CiCG) des composantes image des signatures relevant de la classe graphique considérée ;
- on analyse (60,61,62) l'activité de la valeur moyenne de la composante image pour détecter une activité significative d'un bloc d'information dans les images numériques ;
- et les résultats de ladite détection sont exploités pour comparer les composantes postales des signatures.

3. Procédé selon la revendication 2, dans lequel la composante image des signatures comprend des premiers attributs dits « globaux » représentatifs de caractéristiques physiques globales prises sur l'ensemble des points de l'image d'un envoi et des seconds attributs dits « locaux » représentatifs de caractéristiques physiques locales prises sur des parties distinctes d'un quadrillage de l'image d'un envoi, et dans lequel on exploite lesdits attributs globaux et lesdits attributs locaux pour établir une similarité de signatures.

4. Procédé selon la revendication 3, dans lequel on réalise un seuillage de la distance vectorielle normée sur les attributs globaux pour établir ladite similarité.

5. Procédé selon la revendication 3 ou 4, dans lequel on réalise un calcul de coefficient de corrélation sur les attributs locaux pour établir ladite similarité.

6. Procédé selon l'une des revendications 3 à 5, dans lequel on utilise une méthode d'analyse topologique du type K-means pour analyser l'activité des attributs locaux de la composante image.

7. Procédé selon l'une des revendications précédentes, dans lequel les classes graphiques sont construites à la volée en seconde passe de tri à partir des signatures courantes successives.

## Claims

1. A method of processing mailpieces (P) which method, during a first mailpiece sorting pass, comprises forming (12) a digital image of the surface of each mailpiece that bears information blocks (AD, AE, L), in deriving (13) a digital signature (V_Id) from each image associated with a mailpiece, which signature is a logical identifier for the mailpiece, and in recording (16) the signature (V_Id) in a memory in correspondence with sorting information, and, during a second mailpiece sorting pass, comprises forming (41) a digital image of said surface of each mailpiece again in order to derive (42) a current digital signature (V_IdC) associated with the mailpiece, and in searching through the signatures recorded in the first sorting pass for a match with said current signature in order to retrieve the sorting information by association, said method being **characterized in that** it further comprises the following steps:
grouping together (43) the signatures into signature categories or graphical classes (CG) on the basis of a certain criterion of graphical similitude so as to compute (57) a mean signature value for each graphical class;
analyzing (60, 61, 62), for each graphical class in question, activity of the mean signature value for the purpose of detecting significant activity of an information block in the digital images; and
using the results of this activity detection for the purpose of searching for a match.

2. A method according to claim 1, in which each digital signature associated with a mailpiece comprises an image component (CiC) representative of physical characteristics of the digital image of the mailpiece, and a postal component (CpC) representative at least of the spatial position of the information blocks present in the image of the mailpiece, and in which the method further comprises:
grouping together the signatures into graphical classes on the basis of a certain criterion of graphical similitude of their image components for the purpose of computing a mean value (CiCG) for the image components of the signatures coming under the graphical class in question;
analyzing (60, 61, 62) the activity of the mean value of the image component for the purpose of detecting significant activity of an information block in the digital images; and
using the results of this detection for the purpose of comparing the postal components of the signatures.

3. A method according to claim 2, in which the image components of each of the signatures comprises "global" first attributes representative of overall physical characteristics taken from all of the pixels of the image of a mailpiece and "local" second attributes representative of local physical characteristics taken from distinct portions of a grid applied over the image of a mailpiece, and in which said global attributes and said local attributes are used to establish signature similarity.

4. A method according to claim 3, in which thresholding of the normalized vector distance is performed on the global attributes so as to establish said similarity.

5. A method according to claim 3 or claim 4, in which a correlation coefficient is computed on the local attributes so as to establish said similarity.

6. A method according to any one of claims 3 to 5, in which a topological analysis method of the "K-means" type is used to analyze the activity of the local attributes of the image component.

7. A method according to any preceding claim, in which the graphical classes are generated on the fly in the second sorting pass on the basis of the successive current signatures.

## Patentansprüche

1. Verfahren zum Bearbeiten von Postsendungen (P), bei dem bei einem ersten Sortierdurchgang der Sendungen ein digitales Bild der Oberfläche jeder Sendung gebildet (12) wird, das Informationsblöcke (AD, AE, L) umfasst, von jedem mit einer Sendung assoziierten Bild eine digitale Signatur (V-Id) gewonnen (13) wird, die eine logische Kennung für die Sendung ist, und die Signatur (V-Id) entsprechend den Sortierinformationen im Speicher gespeichert (16) wird, und bei dem bei einem zweiten Sortierdurchgang der Sendungen erneut ein digitales Bild der genannten Oberfläche jeder Sendung gebildet (41) wird, um eine mit der Sendung assoziierte laufende digitale Signatur (V-IdC) zu gewinnen (42), und unter den im ersten Sortierdurchgang gespeicherten Signaturen eine Übereinstimmung mit dieser laufenden Signatur gesucht wird, um die Sortierinformationen für die Sendung durch Assoziation zurückzugewinnen, **dadurch gekennzeichnet, dass** es die folgenden Schritte beinhaltet:
- Umgruppieren (43) der Signaturen in Signaturkategorrien oder Grafikklassen (CG) gemäß einem grafischen Ähnlichkeitskriterium, um einen Signaturmittelwert für jede Grafikklasse zu berechnen (57);
- Analysieren (60, 61, 62) einer Aktivität des Signaturmittelwertes für jede betrachtete Grafikklasse, um eine kennzeichnende Aktivität eines Informationsblocks in den digitalen Bildern zu erkennen
- und Nutzen der Ergebnisse der genannten Aktivitätserkennung für die Suche nach Übereinstimmung.

2. Verfahren nach Anspruch 1, bei dem jede mit einer Sendung assoziierte digitale Signatur einen Bildbestandteil (CiC), der für physische Eigenschaften des digitalen Bildes der Sendung repräsentativ ist, und einen postalischen Bestandteil (CpC) umfasst, der mindestens für die räumliche Position von in dem Bild der Sendung vorliegenden Informationsblöcken repräsentativ ist, und bei dem:
- die Signaturen gemäß einem grafischen Ähnlichkeitskriterium ihres Bildbestandteils in Grafikklassen umgruppiert werden, um einen Mittelwert (CiCG) der Bildbestandteile der Signaturen zu berechnen, die für die betrachtete Grafikklasse relevant sind;
- Analysieren (60, 61, 62) der Aktivität des Mittelwertes des Bildbestandteils, um eine kennzeichnende Aktivität eines Informationsblocks in den digitalen Bildern zu erkennen
- und die Ergebnisse der genannten Erkennung zum Vergleichen der postalischen Bestandteile der Signaturen benutzt werden.

3. Verfahren nach Anspruch 2, bei dem der Bildbestandteil der Signaturen erste, "global" genannte Attribute, die für globale physische Eigenschaften repräsentativ sind, die von der Anordnung von Punkten des Bildes einer Sendung genommen werden, und zweite, "lokal" genannte Attribute umfasst, die für lokale physische Eigenschaften repräsentativ sind, die von separaten Teilen eines Rasters des Bildes einer Sendung genommen werden, und bei dem die genannten globalen Attribute und die genannten lokalen Attribute zum Feststellen einer Gleichartigkeit von Signaturen benutzt werden.

4. Verfahren nach Anspruch 3, bei dem ein Schwellenwert für den normierten vektoriellen Abstand an den globalen Attributen gebildet wird, um die genannte Gleichartigkeit zu bestimmen.

5. Verfahren nach Anspruch 3 oder 4, bei dem eine Korrelationskoeffizientenberechnung mit den lokalen Attributen durchgeführt wird, um die genannte Gleichartigkeit zu bestimmen.

6. Verfahren nach einem der Ansprüche 3 bis 5, bei dem ein topologisches Analyseverfahren des Typs K-means durchgeführt wird, um die Aktivität der lokalen Attribute des Bildbestandteils zu analysieren.

7. Verfahren nach einem der vorherigen Ansprüche, bei dem die Grafikklassen im Lauf des zweiten Sortierdurchgangs von den sukzessiven laufenden Signaturen erstellt werden.
